# EUROPÄISCHE PATENTANMELDUNG

(11) **EP 1 110 979 A1**
(43) Veröffentlichungstag der Anmeldung: **27.06.2001**
(21) Anmeldenummer: 00125252.7
(22) Anmeldetag: 24.11.2000
(51) Int. Cl.: C08F 220/12, C08F 236/04, C04B 24/26

(54) **Polyvinylalkohol-stabilisierte 1,3-Dien-(Meth)acrylsäureester-Mischpolymerisate**

(30) Priorität: 23.12.1999 DE 19962568
(71) Anmelder: Wacker Polymer Systems GmbH & Co. KG, 84489 Burghausen (DE)
(72) Erfinder: Mayer, Theo, Dr., 84387 Julbach (DE); Härzschel, Reinhard, Dr., 84489 Burghausen (DE)
(74) Vertreter: Schuderer, Michael, Dr.

(57) **Zusammenfassung**

Die Erfindung betrifft mit Polyvinylalkohol stabilisierte Mischpolymerisate von 1,3-Dienen mit Methacrylsäureestern und/oder Acrylsäureestern in Form deren wässrigen Polymerdispersionen oder in Wasser redispergierbaren Polymerpulver, sowie ein Verfahren zu deren Herstellung und deren Verwendung.

## Beschreibung

Die Erfindung betrifft mit Polyvinylalkohol stabilisierte Mischpolymerisate von 1,3-Dienen mit Methacrylsäureestern und/oder Acrylsäureestern in Form deren wässrigen Polymerdispersionen oder in Wasser redispergierbaren Polymerpulver, sowie ein Verfahren zu deren Herstellung und deren Verwendung.

Wie in der WO-A 97/15603 erläutert, besitzen Polymerdispersionen, welche mit Polyvinylalkohol (PVAl) stabilisiert sind, charakteristische Rheologie- und Tack-Eigenschaften, so daß diese im Gegensatz zu emulgatorstabilisierten Dispersionen für Coating- und Klebstoffanwendungen besonders geeignet sind. Zum Beispiel weisen Papierverpackungsklebstoffe, hergestellt mit emulgatorstabilisierten Copolymer-Dispersionen gegenüber PVAl-stabilisierten Copolymerdispersionen, bedingt durch die feinen Teilchen (Teilchengröße im allgemeinen < 400 nm), die Rheologie und die niedrige Oberflächenspannung der emulgatorstabilisierten Dispersion, schlechte Maschinenlaufeigenschaften auf. Ein Nachteil der mit Copolymerdispersionen auf Vinylester- oder Acrylsäureester-Basis hergestellten Klebstoffe ist, daß aufgrund deren im allgemeinen relativ hohen Glasübergangstemperatur (Tg) bzw. der Mindestfilmbildungstemperatur (MFT) die Zugabe von Weichmacher zur Verarbeitung notwendig ist.

Mit Vinylacetat-Ethylen-Copolymerdispersionen können Weichmacher-freie Papierverpackungsklebstoffe hergestellt werden, die mit zunehmendem Ethylenanteil und damit einhergehender fallender Tg besser werdende Adhäsionseigenschaften aufweisen. Ein Nachteil der mit Polyvinylalkohol stabilisierten Vinylacetat-Ethylen-Copolymerdispersionen hergestellten Klebstoffen ist, daß der Absenkung der Tg durch Copolymerisation mit Ethylen aufgrund der Kristallisation der Vinylacetat-Ethylen-Copolymere Grenzen gesetzt sind.

Mit Polymerdispersionen auf der Basis von Acrylsäureester-Polymerisaten können durch die Copolymerisation von 2-Ethylhexylacrylat Glasübergangstemperaturen Tg bis unter -50 °C erreicht werden. Allerdings setzen Reinacrylat-Dispersionen auf alkalischem Untergrund bei pH > 9 durch Verseifung der Estergruppe die entsprechenden Alkohole frei. So wird aus 2-Ethylhexylacrylat 2-Ethylhexylalkohol freigesetzt, der an die Umgebungsluft abgegeben werden kann. Durch Oxidation von 2-Ethylhexylalkohol zur entsprechenden Säure können außerdem toxikologisch nicht unbedenkliche Folgeprodukte erzeugt werden. Ein weiterer Nebeneffekt ist, daß durch Hydrolyse der Estergruppe Polyacrylsäuredomänen mit recht hoher Tg erhalten werden. Die hohe Tg wirkt sich wiederum verschlechternd auf das viskoelastische Modul des Harzes und damit negativ auf eine Reihe von anwendungstechnischen Eigenschaften wie Benetzung und Adhäsion aus.

Es bestand daher die Aufgabe einen verseifungsstabilen Dispersions- bzw. Pulvertyp zur Verfügung zu stellen, dessen Polymerharz in einem breiten Tg-Bereich hergestellt werden kann (-80°C < Tg < +100°C). Die wässrige Dispersion bzw. Redispersion sollte die vorteilhaften rheologischen Eigenschaften (Maschinenlaufeigenschaften) von mit Polyvinylalkohol stabilisierten Vinylester- bzw. Acrylat-Dispersionen aufweisen und auch bei niedriger Tg, weichmacherfrei, gute Adhäsion zu den verschiedensten Untergründen wie Papier, Kunststoffe, Mineralien aufweisen.

Gelöst werden konnte diese Aufgabe durch ein Verfahren, mit dem mit Polyvinylalkohol stabilisierte Mischpolymerisate von 1,3-Dienen mit Methacrylsäureestern und/oder Acrylsäureestern in Form deren wässrigen Polymerdispersionen oder in Wasser redispergierbaren Polymerpulver zugänglich werden.

Aus der DE-A 2442121 (GB-A 1438449) war bekannt, daß Polyvinylalkohol als alleiniges Dispergiermittel bei der Herstellung von Polymerisaten von (Meth)acrylsäureestern oder Butadienen nicht wirksam ist, und dieser daher immer im Gemisch mit Emulgatoren eingesetzt worden ist. In der DE-A 2442121 wird daher für die Herstellung von mit Polyvinylalkohol stabilisierten Polymerisaten von (Meth)acrylat- bzw. Butadien-Monomeren die Verwendung eines mit Alkalimetallolefinsulfonat modifizierten Polyvinylalkohols empfohlen. Nachteilig ist, daß es sich dabei auch um einen ionischen Stabilisator handelt, und daher die bei Emulgatoren auftretenden, oben beschriebenen Nachteile ebenfalls auftreten.

In der WO-A 97/15603 werden mit Polyvinylalkohol und Emulgator stabilisierte Butadien-(Meth)acrylat-Mischpolymerisate beschrieben, die durch Aufpropfen des Polyvinylalkohol-Anteils auf das Mischpolymerisat mittels eines funktionalisierten Silans, speziell Mercaptotrialkoxysilan, erhalten werden.

Die US-A 5200459 empfiehlt zur Herstellung von mit Polyvinylalkohol stabilisierten, wässrigen Butadien-Mischpolymerisat-Latices die Copolymerisation in Gegenwart eines stabilisierenden Lösungsmittels, insbesondere aus der Gruppe der Alkohole.

Aus der WO-A 99/28360 ist die Herstellung von mit Polyvinylalkohol stabilisierten Styrol-Butadien-Copolymer-Dispersionen bzw. Dispersionspulver bekannt. Styrolhaltige Copolymerdispersionen haben allerdings den Nachteil der für viele Anwendungen (beispielsweise in Klebstoffen) ungünstigen viskoelastischen Polymereigenschaften (schlechte Verformbarkeit). Styrol erzeugt im Copolymer Polymerdomänen mit hoher Tg; diese führen zu ungünstigeren viskoelastischen Harzeigenschaften. Die Folge davon sind beispielsweise bei Klebstoffen verschlechterte Benetzungseigenschaften und ein schlechterer Tack.

Aus der DE-A 19548313 (US-A 5733944) und der EP-A 744418 (US-A 5733944) sind Verfahren zur Herstellung von wässrigen Dispersionen von Butadien-(Meth)-acrylat-Copolymeren bekannt, welche in Gegenwart von Schutzkolloid und Emulgator hergestellt werden.

Gegenstand der Erfindung sind Emulgator- und Lösungsmittel-freie und mit nichtionischem Polyvinylakohol als Schutzkolloid stabilisierte Mischpolymerisate von 1,3-Dienen mit Methacrylsäureestern und/oder Acrylsäureestern in Form deren wässrigen Polymerdispersionen oder in Wasser redispergierbaren Polymerpulver erhältlich durch Emulsionspolymerisation, und gegebenenfalls Trocknung der damit erhaltenen Polymerdispersionen, wobei 10 bis 100 Gew.-% des Polyvinylalkoholanteils vor der Initiierung der Polymerisation vorgelegt werden und der restliche Anteil während der Polymerisation zudosiert wird, und die Zugabe von Polyvinylalkohol und der Comonomere so gesteuert wird, daß während der Polymerisation die Menge an Schutzkolloid immer 1 bis 70 Gew.-% der Gesamtmenge an freien Comonomeren beträgt.

Ein weiterer Gegenstand der Erfindung ist ein Verfahren zur Herstellung von Emulgator- und Lösungsmittel-freien, mit Polyvinylalkohol als Schutzkolloid stabilisierten Mischpolymerisaten von 1,3-Dienen mit Methacrylsäureestern und/oder Acrylsäureestern in Form deren wässrigen Polymerdispersionen oder in Wasser redispergierbaren Polymerpulver durch Emulsionspolymerisation eines Gemisches enthaltend ein oder mehrere Comonomere aus der Gruppe der 1,3-Diene und ein oder mehrere Comonomere aus der Gruppe der Methacrylsäureester und Acrylsäureester in Gegenwart von 1 bis 15 Gew.-%, bezogen auf das Gesamtgewicht der Monomere, eines oder mehrerer Polyvinylalkohole und gegebenenfalls Trocknung der damit erhaltenen Polymerdispersionen, wobei 10 bis 100 Gew.-% des Polyvinylalkoholanteils vor der Initiierung der Polymerisation vorgelegt werden und der restliche Anteil während der Polymerisation zudosiert wird, und die Zugabe von Polyvinylalkohol und der Comonomere so gesteuert wird, daß während der Polymerisation die Menge an Schutzkolloid immer 1 bis 70 Gew.-% der Gesamtmenge an freien Comonomeren beträgt.

Geeignete 1,3-Diene sind 1,3-Butadien und Isopren, bevorzugt wird 1,3-Butadien. Geeignete Methacrylsäureester und Acrylsäureester sind solche von unverzweigten und verzweigten Alkoholen mit 1 bis 10 C-Atomen. Bevorzugte Methacrylsäureester sind Methylmethacrylat, Ethylmethacrylat, Propylmethacrylat, n-Butylmethacrylat. Besonders bevorzugt wird Methylmethacrylat.

Bevorzugte Acrylsäureester sind Methylacrylat, Ethylacrylat, Propylacrylat, n-Butylacrylat, t-Butylacrylat, t-Butylmethacrylat, 2-Ethylhexylacrylat. Besonders bevorzugt sind Methylacrylat, n-Butylacrylat und 2-Ethylhexylacrylat.

Gegebenenfalls können noch 1 bis zu 30 Gew.-%, bezogen auf das Gesamtgewicht des Monomergemisches, weitere mit 1,3-Dienen und den (Meth)acrylsäureestern copolymerisierbare Monomere wie Ethylen, Vinylchlorid oder Vinylester von unverzweigten oder verzweigten Carbonsäuren mit 1 bis 15 C-Atomen, beispielsweise Vinylacetat und Vinylester von alpha-verzweigten Monocarbonsäuren mit 5 bis 11 C-Atomen, wie VeoVa9 oder VeoVa10 (Handelsnamen der Fa. Shell), copolymerisiert werden.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere wie Acryloxypropyltri(alkoxy)- und Methacryloxypropyltri (alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Monomerauswahl bzw. die Auswahl der Gewichtsanteile der Comonomere erfolgt dabei so, daß im allgemeinen eine Glasübergangstemperatur Tg von -80°C bis +100°C, vorzugsweise -50°C bis +50°C, besonders bevorzugt -20°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Besonders bevorzugt werden Gemische mit 20 bis 80 Gew.-%, vorzugsweise 30 bis 55 Gew.-% (Meth)acrylsäureester, insbesondere Methylmethacrylat, und 20 bis 80 Gew.-%, vorzugsweise 45 bis 70 Gew.-% 1,3-Dien, insbesondere 1,3-Butadien, wobei die Gemische gegebenenfalls noch ein oder mehrere der obengenannten Hilfsmonomere in den angegebenen Mengen enthalten können, und sich die Anteile in Gew.-% auf 100 Gew.-% aufaddieren.

Die Herstellung der Polyvinylalkohol-stabilisierten Mischpolymerisate erfolgt nach dem Emulsionspolymerisationsverfahren unter Ausschluß von Emulgator, wobei die Polymerisationstemperatur im allgemeinen 40°C bis 100°C, vorzugsweise 60°C bis 90°C beträgt. Die Polymerisation mit 1,3-Butadien erfolgt unter dem Dampfdruck der Reaktionsmischung, im allgemeinen zwischen 2 und 15 bar, bei der gewählten Polymerisationstemperatur. Bei der Copolymerisation von gasförmigen Comonomeren wie Ethylen oder Vinylchlorid kann auch unter höherem Druck, im allgemeinen zwischen 5 bar und 100 bar, gearbeitet werden.

Die Initiierung der Polymerisation erfolgt mit den für die Emulsionspolymerisation gebräuchlichen zumindest teilweise wasserlöslichen, thermischen Initiatoren oder Redox-Initiator-Kombinationen. Geeignete organische Initiatoren sind Hydroperoxide wie tert.-Butylhydroperoxid, tert.-Butylperoxopivalat, Cumolhydroperoxid, Isopropylbenzolmonohydroperoxid oder Azoverbindungen wie Azobisisobutyronitril. Geeignete anorganische Initiatoren sind die Natrium-, Kalium- und Ammoniumsalze der Peroxodischwefelsäure. Die genannten Initiatoren werden im allgemeinen in einer Menge von 0.05 bis 3 Gew.-%, bezogen auf das Gesamtgewicht der Monomere, eingesetzt.

Als Redox-Initiatoren verwendet man Kombinationen aus den genannten Initiatoren mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 5.0 Gew.-%, bezogen auf das Gesamtgewicht der
Monomere.

Geeignete Polyvinylalkohole sind nichtionische, teilverseifte Polyvinylacetate und nichtionische, hydrophob modifizierte, teilverseifte Polyvinylester sowie deren Gemische, wobei die genannten Polyvinylalkohole auch im Gemisch mit weiteren Schutzkolloiden eingesetzt werden können.

Besonders bevorzugt werden nichtionische, teilverseifte Polyvinylacetate mit einem Hydrolysegrad von 80 bis 95 Mol-%, und einer Höpplerviskosität (4 %-ige wässrige Lösung, DIN 53015, Methode nach Höppler bei 20°C) von 1 bis 30 mPas, vorzugsweise 2 bis 15 mPas.

Bevorzugt werden auch nichtionische, hydrophob modifizierte, teilverseifte Polyvinylester, welche als 2 %-ige wässrige Lösung eine Oberflächenspannung von ≤ 40 mN/m erzeugen. Geeignete hydrophob modifizierte, teilverseifte Polyvinylester können beispielsweise mittels Hydrophobierung von Polyvinylacetat durch Copolymerisation von Vinylacetat mit hydrophoben Comonomeren erhalten werden. Beispiele hierfür sind Isopropenylacetat, langkettige, vorzugsweise mit 7 bis 15 C-Atomen, verzweigte und unverzweigte Vinylester wie Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate von C₁- bis C₁₂- Alkoholen wie Diisopropylmaleinat und Diisopropylfumarat, Vinylchlorid, Vinylalkylether von Alkoholen mit mindestens 4 C-Atomen wie Vinylbutylether, C₂- bis C₁₀-Olefine wie Ethen und Decen. Die Hydrophobierung kann auch durch Polymerisation von Vinylacetat in Gegenwart von Reglern wie Alkylmercaptanen mit C₂- bis C₁₈-Alkylrest wie Dodecylmercaptan oder tert.-Dodecylmercaptan erfolgen. Eine weitere Möglichkeit zur Hydrophobierung von Polyvinylacetat ist die polymeranaloge Umsetzung, beispielsweise Acetalisierung von Vinylalkoholeinheiten in teilverseiftem Polyvinylacetat mit C₁- bis C₄-Aldehyden wie Butyraldehyd.

Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 70 bis 99.9 Mol-%, vorzugsweise 84 bis 92 Mol-%, die Höpplerviskosität (DIN 53015, Methode nach Höppler, 4%-ige wässrige Lösung) von 1 bis 30 mPas, vorzugsweise 2 bis 15 mPas. Die genannten Schutzkolloide sind mittels dem Fachmann bekannter Verfahren zugänglich.

Besonders bevorzugt werden als hydrophob modifizierte, teilverseifte Polyvinylester die teilverseiften Polyvinylacetate mit 84 bis 92 Mol-% Vinylalkohol-Einheiten und 0.1 bis 10 Gew.-% an Einheiten, welche sich von Vinylestern einer alpha-verzweigten Carbonsäure mit 5 oder 9 bis 11 C-Atomen im Säurerest, Isopropenylacetat und Ethen ableiten; insbesondere die teilverseiften Polyvinylacetate mit Vinylalkohol-Einheiten und Einheiten von Vinylestern von alpha-verzweigten Carbonsäuren mit 5 oder 9 bis 11 C-Atomen in den genannten Mengen. Beispiele für derartige Vinylester sind solche, welche als Versaticsäurevinylester von der Fa. Shell unter den Bezeichnungen VeoVa^{R}5, VeoVa^{R}9, VeoVa^{R}10 und VeoVa^{R}11 angeboten werden. Besonders bevorzugt werden auch Kombinationen aus den als besonders bevorzugt genannten, hydrophob modifizierten Polyvinylestern mit teilverseiften Polyvinylacetaten mit einem Hydrolysegrad von 80 bis 95 Mol-%, einer Höpplerviskosität von 1 bis 30 mPas, vorzugsweise 2 bis 15 mPas, welche als 2%-ige wässrige Lösung eine Oberflächenspannung von > 40 mN/m erzeugen.

Geeignete weitere Schutzkolloide, welche im Gemisch mit den genannten Polyvinylalkoholen eingesetzt werden können, sind Polyvinylpyrrolidone, Carboxymethyl-, Methyl-, Hydroxyethyl-, Hydroxypropyl-Cellulose, Stärken, Dextrine, Cyclodextrine, Poly(meth)acrylsäure, Poly(meth)acrylamid, Polyvinylsulfonsäuren, Melaminformaldehydsulfonate, Naphthalinformaldehydsulfonate, Styrolmaleinsäure- und Vinylethermaleinsäure-Copolymere.

Die Schutzkolloide werden im allgemeinen in einer Menge von insgesamt 1 bis 15 Gew.-%, bezogen auf das Gesamtgewicht der Monomere, bei der Polymerisation zugesetzt. Im Falle des Einsatzes einer Schutzkolloidkombination beträgt das Gewichtsverhältnis von hydrophobiertem, teilverseiftem Polyvinylester zu nicht hydrophobiertem, teilverseiftem Polyvinylalkohol 10/1 bis 1/10.

Zur Steuerung des Molekulargewichts werden vorzugsweise bei der Polymerisation regelnde Substanzen (Regler) eingesetzt. Beispiele solcher Substanzen sind n-Dodecylmercaptan, tert.-Dodecylmercaptan, Mercaptopropionsäure, Mercaptopropionsäuremethylester, Isopropanol und Acetaldehyd. Sie werden üblicherweise in Mengen zwischen 0.01 bis 5.0 Gew.-%, vorzugsweise 0.5 bis 2.0 Gew.-%, jeweils bezogen auf die zu polymerisierenden Monomeren, eingesetzt.

Zur Initiierung der Polymerisation wird der Initiator insgesamt vorgelegt, teilweise vorgelegt und teilweise dosiert, oder insgesamt zudosiert. Der Polyvinylalkoholanteil bzw. der Anteil an weiterem Schutzkolloid sowie der Anteil der Comonomere kann dabei insgesamt vorgelegt werden, teilweise vorgelegt und teilweise dosiert werden, oder insgesamt dosiert werden. Eine bevorzugt Ausführungsform besteht darin, den gesamten Schutzkolloidanteil sowie 5 bis 25 Gew.-% der Gesamtmenge an Comonomer vorzulegen, und die restliche Comonomermenge während der Polymerisation zuzudosieren. In einer weiteren bevorzugten Ausführungsform wird die Gesamtmenge an Schutzkolloid und die Gesamtmenge an Comonomer vor der Initiierung der Polymerisation vorgelegt und in Gegenwart von Regler polymerisiert. Bevorzugt ist auch eine Vorgehensweise bei der unter Vorlage des gesamten Schutzkolloids oder unter Teilvorlage des Schutzkolloids der Comonomeranteil und der Regleranteil teilweise vorgelegt werden und der Rest jeweils zudosiert wird. Es kann dabei so vorgegangen werden, daß Comonomere und Regler in der Vorlage und bei der Dosierung in einem konstanten Verhältnis zugegeben werden. Bevorzugt ist das Verhältnis von Regler zu Comonomer in der Vorlage größer als in der Dosierung, dazu werden vorzugsweise 15 bis 50 Gew.-% der Gesamtmenge des Reglers vorgelegt und 5 bis 25 Gew.-% der Gesamtmenge der Comonomeren vorgelegt.

Beim Einsatz einer Schutzkolloidkombination kann auch eine Komponente aus der Schutzkolloidkombination, vorzugsweise der hydrophobierte, teilverseifte Polyvinylester, vorgelegt werden, und die andere dosiert werden, oder ein Teil des Gemisches vorgelegt und der Rest als wässrige Lösung zudosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 40 bis 65 Gew.-%. Zur Herstellung von in Wasser redispergierbaren Polymerpulvern werden die wässrigen Dispersionen getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Die Gesamtmenge an Schutzkolloid vor dem Trocknungsvorgang soll vorzugsweise mindestens 10 Gew.-%, bezogen auf den Polymeranteil betragen. Zur Gewährleistung der Redispergierbarkeit ist es in der Regel erforderlich der Dispersion vor der Trocknung weitere Schutzkolloide als Verdüsungshilfe zuzugeben. In der Regel wird die Verdüsungshilfe in einer Menge von 5 bis 25 Gew.-%, bezogen auf die polymeren Bestandteile der Dispersion, eingesetzt.

Geeignete Verdüsungshilfen sind teilverseifte Polyvinylacetate; Polyvinylpyrrolidone; Polysaccharide in wasserlöslicher Form wie Stärken (Amylose und Amylopectin), Cellulosen und deren Carboxymethyl-, Methyl-, Hydroxyethyl-, HydroxypropylDerivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden als Verdüsungshilfe teilverseifte Polyvinylacetate mit einem Hydrolysegrad von 80 bis 95 Mol-%, einer Höppler-Viskosität von 1 bis 30 mPas, welche gegebenenfalls mit Isopropenylacetat- oder Vinylethereinheiten modifiziert sein können.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, versetzt werden. Beispiele für Antiblockmittel sind Ca- bzw. Mg-Carbonat, Talk, Gips, Kieselsäure, Silicate mit Teilchengrößen vorzugsweise im Bereich von 10 nm bis 10 µm.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die polyvinylalkoholstabilisierten 1,3-Dien-(Meth)acrylsäure-Mischpolymerisate können in Form deren wässrigen Polymerdispersionen oder in Wasser redispergierbaren Polymerpulver in den dafür typischen Anwendungsbereichen eingesetzt werden. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben. Ferner als Alleinbindemittel für Beschichtungsmittel und Klebemittel oder als Beschichtungs- bzw. Bindemittel für Textilien und Papier.

Ein Beispiel für die Verwendung als Klebemittel ist die Verklebung von porösen Substraten, wie die Verklebung von Holz zur Holz-Holz-Verklebung, die Verklebung von Holz mit saugfähigen Substraten wie Estrich, insbesondere die Parkettverklebung. Weitere Anwendungen sind die wasserfeste Verklebung von Papier und Pappe, beispielsweise als Verpackungsklebstoff und Buchbindeklebstoff. Als Klebemittel eignen sich die Mischpolymerisate auch zur Verklebung von Fasermaterialien aus Natur- oder Kunstfaser, beispielsweise zur Herstellung von Holzfaserplatten, zur Verfestigung von Vliesstoffen von Natur- .oder Kunstfasern, zur Herstellung von Formteilen aus Fasermaterialien sowie zur Herstellung von Vorstufen solcher Formteile, den sogenannten Halbzeugen (Waddings). Weitere Anwendungsbeispiele sind die Wattenbindung, beispielsweise von Polster-, Isolier- und Filterwatten, die Herstellung von Laminaten wie Dämmstoffen.

Bevorzugt ist die Verwendung als Gipsmörtel für Spachtelmassen, Joint-Filler, CaSO₄-Fließestriche, Fugenmassen, Klebemörtel oder die Verwendung zur Herstellung von Gipsplatten oder Gipsformen. Weitere Anwendungen sind beispielsweise Putze oder Stukkaturen, auch im Außenbereich. Die üblichen Anwendungen für die entsprechend modifizierten CaCO₃-Werkstoffe sind Jointfiller (Fugenfüller), gipsfreie Spachtelmassen und Putze. Im allgemeinen wird das Mischpolymerisat in einer Menge von 0.2 bis 15 Gew.-%, bezogen auf das Trockengewicht der Rezeptur, eingesetzt.

Bevorzugt ist auch die Anwendung in selbstverlaufenden Bodenspachtelmassen (Verlaufsmassen) und Estrichen. Bevorzugt werden 0.5 bis 10 Gew.-% Dispersionspulver, bezogen auf das Trokkengewicht der Rezeptur, zugegeben. Die Rezepturen enthalten noch 5 bis 80 Gew.-% anorganische, hydraulisch abbindende Bindemittel wie Zement, Gips oder deren Gemische. Weiterer Rezepturbestandteil sind 5 bis 80 Gew.-% anorganische Füllstoffe wie Sand, Quarzmehl, Kreide, Kalksteinmehl, Filterasche oder deren Gemische. Zur Verbesserung der Verlaufseigenschaften können der Trockenmischung gegebenenfalls noch verlaufsfördernde Zusätze wie Casein oder Zementverflüssiger zugegeben werden. Die Angaben in Gew.-% beziehen sich dabei immer auf 100 Gew.-% Trockenmasse der Rezeptur für Bodenspachtelmassen. Die gebrauchsfertige Verlaufmasse erhält man schließlich durch Beigeben von Wasser zur obengenannten Trockenmischung.
Die gebrauchsfertige, mit Wasser angemachte Bodenspachtelmasse kann zur Herstellung von Estrichen und selbstnivellierenden Beschichtungen zum Ebnen, Ausgleichen und Glätten von Untergründen eingesetzt werden.

Eine weitere bevorzugte Verwendung der Dispersionen und Pulver ist die in zementhaltigen Baukleberrezepturen. Typische Rezepturen enthalten 5 bis 80 Gew.-% Zement, 5 bis 80 Gew.-% Füllstoffe wie Quarzsand, Calciumcarbonat oder Talkum, 0.1 bis 2 Gew.-% Verdickungsmittel wie Celluloseether, Schichtsilikate, Polyacrylate, 0.5 bis 60 Gew.-% der PVAl-stabilisierten (Meth)acrylat-1,3-Dien-Mischpolymerisate in Form der Polymerdispersion bzw. des Polymerpulvers und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur. Die genannten zementhaltigen Baukleberrezepturen finden vor allem bei der Verlegung von Fliesen aller Art (Steingut, Steinzeug, Feinststeinzeug, Keramik, Naturfliesen) im Innen- und Außenbereich als Fliesenkleber Verwendung und werden vor deren Verwendung noch mit der entsprechenden Menge Wasser angerührt.

Vorteilhaft an den erfindungsgemäß hergestellten (Meth)acrylat-1,3-Dien-Copolymeren ist ihre mit zunehmendem 1,3-Dien-Anteil gegenüber Reinacrylatcopolymeren verbesserte Verseifungsbeständigkeit. Dadurch bleiben die mechanischen Copolymereigenschaften wie Reißfestigkeit und Reißdehnung auch bei Applikation auf alkalischen Untergründen unverändert erhalten. Desweiteren werden auf alkalischen Untergründen mit derartigen verseifungsstabilen Systemen keine oder nur geringe Mengen an toxikologisch umstrittene Alkohole wie z.B. Butanol oder 2-Ethylhexanol freigesetzt. Gegenüber Styrol-Acrylat-Copolymeren weisen die erfindungsgemäß hergestellten Copolymeren aufgrund ihrer vorteilhaften viskoelastischen Eigenschaften insbesondere für Klebstoffanwendungen verbesserte anwendungstechnische Eigenschaften, insbesondere hohe Oberflächenklebrigkeit (Tack), hohe Adhäsion (Schälfestigkeit) und hohe Kohäsion (Scherstandfestigkeit) auf. Hervorzuheben ist auch die hervorragende Zementstabilität insbesondere der mit hydrophob modifizierten Polyvinylalkoholen stabilisierten Mischpolymerisate. Die erfindungsgemäß hergestellten (Meth)acrylat-1,3-Dien-Copolymeren verfügen auch über die vorteilhaften rheologischen Eigenschaften (Maschinenlaufeigenschaften) von mit Polyvinylalkohol stabilisierten Vinylester- bzw. Acrylat-Dispersionen.

Die nachfolgenden Beispiele dienen der weiteren Erläuterung der Erfindung:

### Beispiel 1:

In einem Rührautoklaven mit ca. 5 1 Inhalt wurden 1110 ml entionisiertes Wasser, 538 g einer 20 Gew%-igen wässrigen Lösung eines teilverseiften Polyvinylacetats mit einem Hydrolysegrad von 88 Mol-%, einer Höpplerviskosität der 4%-igen Lösung von 4 mPas (DIN 53015, Methode nach Höppler bei 20°C), das zu 2 Gew.-% gelöst in Wasser eine Oberflächenspannung von 44 mN/m erzeugte, sowie 363 g einer 20 Gew%-igen wässrigen Lösung eines teilverseiften Copolymeren aus Vinylacetat und VeoVa^{R}10, mit einem Hydrolysegrad von 88 Mol-%, einer Höpplerviskosität der 4%-igen Lösung von 4 mPas, das zu 2 Gew.-% gelöst in Wasser eine Oberflächenspannung von 37 mN/m erzeugte, vorgelegt. Der pH-Wert wurde mit 10 Gew%-iger Ameisensäure auf 4.0 bis 4.2 eingestellt. Anschließend wurde evakuiert, mit Stickstoff gespült, erneut evakuiert und ein Gemisch aus 151 g Methylmethacrylat, 129 g 1,3-Butadien und 8.5 g tert.-Dodecylmercaptan eingesaugt. Dieses Gemisch war durch Zugabe von 30 mg Benzochinon gegen vorzeitige Polymerisation stabilisiert.

Nach Aufheizen auf 80°C wurde die Polymerisation durch gleichzeitiges Einfahren von zwei Katalysatorlösungen gestartet, von denen die erste aus 110 g entionisiertem Wasser und 15.5 g einer 40%-igen wässrigen tert.-Butylhydroperoxidlösung und die andere aus 116 g entionisiertem Wasser und 13 g Natriumformaldehydsulfoxylat bestand, wobei die Dosierung der beiden Katalysatorlösungen mit gleicher Zulaufgeschwindigkeit (18 ml/h) erfolgte. Nach Polymerisationsbeginn wurde mit der dosierten Zugabe eines Gemischs von 729 g 1,3-Butadien, 856 g Methylmethacryalt und 9.5 g tert.- Dodecylmercaptan mit einer Rate von 5.3 g/min begonnen. Nach Ende des Monomerzulaufs wurde noch 2 h bei 80°C mit unveränderter Zulaufgeschwindigkeit der Initiatorlösung nachpolymerisiert, anschließend wurde der Zulauf der Initiatorlösungen beendet und abgekühlt.
Man erhielt eine stabile, grobteilige (Coulter LS 230; Dw = 950 nm) und koagulatfreie Dispersion, die bei einem Festkörpergehalt von 51 % eine Viskosität (Brookfield-Viskosimeter, 20°C, 20 Upm) von 380 mPas aufwies.

### Beispiel 2:

Die Herstellung der Dispersion erfolgte analog Beispiel 1, aber unter Vorlage von 900 g einer 20 Gew%-igen wässrigen Lösung eines teilverseiften Polyvinylacetats mit einem Hydrolysegrad von 88 Mol-%, einer Höpplerviskosität der 4%-igen Lösung von 4 mPas, das zu 2 Gew.-% gelöst in Wasser eine Oberflächenspannung von 44 mN/m erzeugte, als alleinigem Schutzkolloid. Alle anderen Maßnahmen entsprachen Beispiel 1. Die Dispersion wurden mit 50 Gew.-% einer 10.3 Gew%-igen Lösung eines Polyvinylalkohols (teilverseiftes Polyvinylacetat, Hydrolysegrad 88 Mol-%) versetzt und durch eine Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 % handelsüblichem Antiblockmittel (Gemisch aus Calcium-Magnesium-Carbonat und Magnesiumhydrosilikat) versetzt.
Zur Testung wurde eine 50 %-ige Redispersion des Pulvers eingesetzt.

### Beispiel 3:

Die Herstellung der Dispersion erfolgte analog Beispiel 1, aber unter Vorlage von 900 g einer 20 Gew%-igen wässrigen Lösung eines teilverseiften Copolymeren aus Vinylacetat und VeoVa^{R}10 mit einem Hydrolysegrad von 88 Mol-% und eine Höpplerviskosität der 4%-igen Lösung von 4 mPas, das zu 2 Gew.-% gelöst in Wasser eine Oberflächenspannung von 37 mN/m erzeugte, als alleinigem Schutzkolloid. Alle anderen Maßnahmen entsprachen Beispiel 1.
Die Dispersion wurde analog Beispiel 2 getrocknet. Zur Testung wurde eine 50 %-ige Redispersion des Pulvers eingesetzt.

### Beispiel 4:

Die Herstellung der Dispersion erfolgte analog Beispiel 1, wobei anstelle des teilverseiften Polyvinylacetats 800 g einer 10 Gew%-igen wässrigen Lösung eines Gelbdextrins (Avedex 35, Fa. Avebe), das zu 2 Gew.-% gelöst in Wasser eine Oberflächenspannung von 50 mN/m erzeugte, zusammen mit dem hydrophob modifiziertem Polyvinylalkohol eingesetzt wurde. Alle anderen Maßnahmen entsprachen Beispiel 1.

### Beispiel 5:

Die Herstellung der Dispersion erfolgte analog Beispiel 1, aber unter Vorlage von 137 g Methylmethacrylat, 143 g 1,3-Butadien und 9.4 g tert.-Dodecylmercaptan. Zudosiert wurde ein Gemisch bestehend aus 777 g Methylmethacrylat, 808 g 1,3-Butadien und 10.5 g tert.-Dodecylmercaptan. Alle anderen Maßnahmen entsprachen Beispiel 1.

### Beispiel 6:

Die Herstellung der Dispersion erfolgte analog Beispiel 1, aber unter Vorlage von 120 g Methylmethacrylat, 159 g 1,3-Butadien und 10.4 g tert.-Dodecylmercaptan. Zudosiert wurde ein Gemisch bestehend aus 682 g Methylmethacrylat, 904 g 1,3-Butadien und 11.6 g tert.-Dodecylmercaptan. Alle anderen Maßnahmen entsprachen Beispiel 1.

### Beispiel 7:

Die Herstellung der Dispersion erfolgte analog Beispiel 1, aber unter Vorlage von 103 g Methylmethacrylat, 176 g Butadien und 11.5 g tert.-Dodecylmercaptan. Zudosiert wurde ein Gemisch bestehend aus 587 g Methylmethacrylat, 999 g 1,3-Butadien und 12.9 g tert.-Dodecylmercaptan. Alle anderen Maßnahmen entsprachen Beispiel 1.

### Beispiel 8:

Die Herstellung der Dispersion erfolgte analog Beispiel 1, aber unter Vorlage von 84 g Methylmethacrylat, 196 g Butadien und 12.8 g tert.-Dodecylmercaptan. Zudosiert wurde ein Gemisch bestehend aus 475 g Methylmethacrylat, 1110 g 1,3-Butadien und 14.3 g tert.-Dodecylmercaptan. Alle anderen Maßnahmen entsprachen Beispiel 1.

### Vergleichsbeispiel 1:

Die Herstellung der Dispersion erfolgte analog Beispiel 1, aber unter Vorlage von 78 g Styrol und 201 g n-Butylacrylat. Zudosiert wurde ein Gemisch bestehend aus 444 g Styrol und 1142 g n-Butylacrylat. Auf die Zugabe von tert.-Dodecylmercaptan wurde verzichtet. Alle anderen Maßnahmen entsprachen Beispiel 1.

### Vergleichsbeispiel 2:

Die Herstellung der Dispersion erfolgte analog Beispiel 1, wobei sowohl in der Vorlage als auch in der Dosierung anstatt Methylmethacrylat Styrol eingesetzt. Alle anderen Maßnahmen entsprachen Beispiel 1.

### Vergleichsbeispiel 3:

Die Herstellung der Dispersion erfolgte analog Beispiel 1, aber unter Vorlage von 78 g Methylmethacrylat und 201 g n-Butylacrylat. Zudosiert wurde ein Gemisch bestehend aus 444 g Methylmethacrylat und 1142 g n-Butylacrylat. Auf die Zugabe von tert.-Dodecylmercaptan wurde verzichtet. Alle anderen Maßnahmen entsprachen Beispiel 1.

### Vergleichsbeispiel 4:

Die Herstellung der Dispersion erfolgte analog Beispiel 1, aber unter Vorlage von 137 g Styrol, 143 g 1,3-Butadien und 9.4 g tert.-Dodecylmercaptan. Zudosiert wurde ein Gemisch aus 777 g Styrol, 808 g 1,3-Butadien und 10.5 g tert.-Dodecylmercaptan. Alle anderen Maßnahmen entsprachen Beispiel 1.

### Vergleichsbeispiel 5:

Die Herstellung der Dispersion erfolgte analog Beispiel 1, aber unter Vorlage von 120 g Styrol, 159 g 1,3-Butadien und 10.4 g tert.-Dodecylmercaptan. Zudosiert wurde ein Gemisch aus 682 g Styrol, 904 g 1,3-Butadien und 11.6 g tert.-Dodecylmercaptan. Alle anderen Maßnahmen entsprachen Beispiel 1.

### Vergleichsbeispiel 6:

Die Herstellung der Dispersion erfolgte analog Beispiel 1, aber unter Vorlage von 103 g Styrol, 176 g 1,3-Butadien und 11.5 g tert.-Dodecylmercaptan. Zudosiert wurde ein Gemisch aus 587 g Styrol, 999 g 1,3-Butadien und 12.9 g tert.-Dodecylmercaptan. Alle anderen Maßnahmen entsprachen Beispiel 1.

### Vergleichsbeispiel 7:

Die Herstellung der Dispersion erfolgte analog Beispiel 1, aber unter Vorlage von 84 g Styrol, 196 g 1,3-Butadien und 12.8 g tert.-Dodecylmercaptan. Zudosiert wurde ein Gemisch bestehend aus 475 g Styrol, 1110 g 1,3-Butadien und 14.3 g tert.-Dodecylmercaptan. Alle anderen Maßnahmen entsprachen Beispiel 1.

### Anwendungstechnische Prüfung:

Die zu prüfenden Dispersionen bzw. Redispersionen wurden für alle Messungen mit einem Rakel in einer solchen Dicke auf die Trägerfolie aufgezogen, daß nach dem Trocknen eine gleichmäßige Polymerisatschicht von 24 bis 26 g/m³ zurückblieb.

### Oberflächenklebrigkeit (Tack):

Ein 20 cm langer und 2.5 cm breiter Polymerstreifen (Trägermaterial: polymerweichmacherhaltiges PVC, 0.1 mm dick) wurde in Form einer Schlaufe senkrecht hängend mit der Polymerschicht nach außen in den oberen Backen einer Zugprüfmaschine eingespannt. Anschließend wurde die "Schlaufe" durch Zusammenfahren der beiden Backen der Zugprüfmaschine senkrecht mit einer Geschwindigkeit von 100 mm/Minute auf eine waagrecht befestigte, sorgfältig gereinigte Glasplatte ohne Druckanwendung in einer Länge von etwa 3 cm aufgelegt. Danach erfolgte sofort mit gleicher Geschwindigkeit der Abzug des Polymerstreifens von der Oberfläche. Die höchste für das Abziehen der Schlaufe benötigte Kraft wurde als Maß für die Oberflächenklebrigkeit hergenommen. Der angegebene Wert in N/2.5cm ist der Mittelwert aus fünf Einzelmessungen, wobei jedes Mal ein frischer Polymerstreifen und eine frische Glasoberfläche verwendet wurden.

### Adhäsion (Schälfestigkeit SF):

Ein 20 cm langer und 2.5 cm breiter Polymerstreifen wurde von einem Ende ausgehend in einer Länge von ca. 12 cm auf eine sorgfältig gereinigte Kristallglasoberfläche blasenfrei aufgelegt. Durch 5-maliges Walzen (hin und her) mit einer 2.2 kg schweren, mit Silicongummi überzogenen Stahlwalze wurde der Polymerstreifen angedrückt. Nach 8-minütiger bzw. 24-stündiger Lagerung im Klimaraum bei 23°C und 50 % relativer Luftfeuchtigkeit wurde der Polymerstreifen mit einer Geschwindigkeit von 300 mm/Minute im 180° Winkel über eine Länge von 5 cm abgezogen. Die dazu benötigte durchschnittliche Kraft wurde gemessen. Die angegebenen Werte in N/2.5cm sind Mittelwerte aus jeweils 5 Einzelmessungen.

### Kohäsion (Scherstandfestigkeit SSF):

Ein 5 cm langer und 2.5 cm breiter Polymerstreifen wurde mit einer Fläche von 2.5 cm x 2.5 cm so auf eine sorgfältig gereinigte Glasplatte blasenfrei aufgelegt, daß das restliche Stück Polymerstreifen über den Rand der Glasplatte hinausragte. Der Streifen wurde durch das Anwalzen (5-mal hin und her) mit einer mit Silicongummi überzogenen, 2.2 kg schweren Stahlwalze aufgedrückt. Nach einer Verklebungszeit von 8 Minuten wurde eine Glasplatte so in einem Winkel von 2° zur Senkrechten (um Schälkräfte sicher auszuschließen) in einer Halterung befestigt, daß das freie Ende des Polymerstreifens nach unten hing. An diesem Ende wurde ein Gewicht von 2 kg frei hängend befestigt. Es wurde die Zeit bestimmt, bis sich das freie Ende des Polymerstreifens unter dem Zug des Gewichtes von der Glasplatte löste. Die Messung wurde in einem Klimaraum bei 23°C und 50 % relativer Luftfeuchtigkeit durchgeführt. Die angegebenen Werte in Minuten sind Mittelwerte aus jeweils 3 Einzelmessungen.

### Bestimmung der Verseifungsstabilität:

Den Dispersionen mit einem (mit entionisiertem Wasser) auf 50 Gew.-% eingestellten Feststoffgehaltes wurde eine repräsentative Probe entnommen, wobei die Dispersion keine Luftblasen enthalten sollte. Mit Hilfe eines Filmziehschlittens wurde auf einem Trägermaterial (Trägermaterial: polymerweichmacherhaltiges PVC, 0.1 mm dick) ein Dispersionsfilm mit einer Naßfilmstärke von 500 um erzeugt, der anschließend 24 h unter Bildung eines Polymerfilms bei Raumtemperatur trocknete. Aus dem erhaltenen Dispersionsfilm wurden anschließend Filmstücke der Größe 10 cm x 10 cm ausgestanzt. Danach gab man ein 10 cm x 10 cm großes Filmstück in einen mit 350 ml 1.0 n wässriger Kaliumhydroxidlösung gefüllten 500 ml Erlenmeyer-Kolben. Der Erlenmeyer-Kolben wurde mit einem Stopfen verschlossen und bei 70°C in einem Klimaschrank 24 h belassen. Anschließend wurde der Dispersionsfilm aus der KOH-Lösung genommen, mit entionisiertem Wasser gespült und mit einem Papiervlies trockengetupft. Das alkalisch behandelte und ein unbehandeltes Filmstück wurden 24 h bei Normklima (23°C, 50 % Luftfeuchtigkeit) getrocknet, bevor daraus Probekörper der Größe 50 mm x 8 mm nach DIN 53504/NSt S3a ausgestanzt wurden. Probekörper des alkalisch behandelten und unbehandelten Dispersionsfilms wurden danach unter Standardbedingungen nach DIN 53504 auf Reißfestigkeit und Reißdehnung geprüft werden.

Die Prüfergebnisse sind in Tabelle 1 zusammengefaßt.

Der Vergleich von Beispiel 1 mit den Vergleichsbeispielen 1 und 2 zeigt, daß die 1,3-Butadien-Methylmethacrylat-Copolymerisate im Vergleich zu den entsprechenden Styrol-Butylacrylat- (Vergleichsbeispiel 1) und Styrol-1,3-Butadien-Mischpolymerisaten deutlich bessere Adhäsion und Kohäsion zeigen.

Der Vergleich von Beispiel 1 mit Vergleichsbeispiel 3 zeigt, daß die 1,3-Butadien-Methylmethacrylat-Copolymerisate wesentlich verseifungsstabiler sind, als das entsprechende Butylacrylat-Methylmethacrylat-Mischpolymerisat. Bei letzterem führt die Alkalibehandlung zu einer deutlichen Verschlechterung von Reißdehnung und Reißfestigkeit.

Der Vergleich der Beispiele 5 bis 8 mit den Vergleichsbeispielen 4 bis 7 zeigt, daß die Methylmethacrylat-Butadien-Copolymere bei gleicher Tg einen deutlich besseren Tack zeigen, als die Styrol-Butadien-Copolymere.

**Tabelle 1:**

| Beispiel | Polymer | Tg | Unbehandelt | | Alkalibehandelt | | Tack | SSF | SF |
|---|---|---|---|---|---|---|---|---|---|
| | | [°C] | RD [%] | Rf [N/mm²] | RD [%] | Rf [N/mm²] | [N/2,5 cm] | [min] | [N/2,5 cm] |
| 1 | Bu/MMA | -10 | 345 | 12,3 | 305 | 10,1 | 2.1 | 2100 | 10.3 |
| 2 | Bu/MMA | -10 | 332 | 13,1 | 301 | 11,2 | 2.0 | 2300 | 11.1 |
| 3 | Bu/MMA | -10 | 360 | 12,7 | 306 | 10,8 | 2.2 | 2250 | 10.8 |
| 4 | Bu/MMA | -10 | 310 | 13,3 | 295 | 11,5 | 2.1 | 2400 | 10.9 |
| 5 | Bu/MMA | -20 | 395 | 14,7 | 370 | 14,9 | 5.1 | >3000 | 12.9 |
| 6 | Bu/MMA | -30 | 450 | 16,1 | 455 | 15,9 | 8.7 | >3000 | 14.9 |
| 7 | Bu/MMA | -40 | 485 | 18,3 | 478 | 18,2 | 11.5 | >3000 | 16.0 |
| 8 | Bu/MMA | -50 | 520 | 19,1 | 526 | 19,0 | 14.1 | >3000 | 19.4 |
| Vergl. 1 | St/A | -10 | 298 | 10,5 | 290 | 8,7 | 1.3 | 320 | 7.3 |
| Vergl. 2 | St/Bu | -10 | 335 | 13,2 | 330 | 12,5 | 1.8 | 420 | 6.9 |
| Vergl. 3 | MMA/A | -10 | 256 | 14,3 | 155 | 6,2 | 2.3 | 1900 | 10.2 |
| Vergl. 4 | St/Bu | -20 | 365 | 16,3 | 355 | 16,1 | 2.1 | 1600 | 8.3 |
| Vergl. 5 | St/Bu | -30 | 420 | 18,5 | 415 | 18,1 | 4.1 | 2150 | 9.8 |
| Vergl. 6 | St/Bu | -40 | 480 | 19,2 | 482 | 19,0 | 4.7 | 2850 | 10.4 |
| Vergl. 7 | St/Bu | -50 | 523 | 19,3 | 510 | 19,1 | 5.8 | >3000 | 11.7 |
| Bu = 1.3-Butadien, MMA = Methylmethacrylat, St = Styrol, | | | | | | | | | |
| A = n-Butylacrylat | | | | | | | | | |

## Patentansprüche

1. Emulgator- und Lösungsmittel-freie und mit nichtionischem Polyvinylakohol als Schutzkolloid stabilisierte Mischpolymerisate von 1,3-Dienen mit Methacrylsäureestern und/oder Acrylsäureestern in Form deren wässrigen Polymerdispersionen oder in Wasser redispergierbaren Polymerpulver erhältlich durch Emulsionspolymerisation, und gegebenenfalls Trocknung der damit erhaltenen Polymerdispersionen, wobei 10 bis 100 Gew.-% des Polyvinylalkoholanteils vor der Initiierung der Polymerisation vorgelegt werden und der restliche Anteil während der Polymerisation zudosiert wird, und die Zugabe von Polyvinylalkohol und der Comonomere so gesteuert wird, daß während der Polymerisation die Menge an Schutzkolloid immer 1 bis 70 Gew.-% der Gesamtmenge an freien Comonomeren beträgt.

2. Verfahren zur Herstellung von Emulgator- und Lösungsmittel-freien, mit Polyvinylalkohol als Schutzkolloid stabilisierten Mischpolymerisaten von 1,3-Dienen mit Methacrylsäureestern und/oder Acrylsäureestern in Form deren wässrigen Polymerdispersionen oder in Wasser redispergierbaren Polymerpulver durch Emulsionspolymerisation eines Gemisches enthaltend ein oder mehrere Comonomere aus der Gruppe der 1,3-Diene und ein oder mehrere Comonomere aus der Gruppe der Methacrylsäureester und Acrylsäureester in Gegenwart von 1 bis 15 Gew.-%, bezogen auf das Gesamtgewicht der Monomere, eines oder mehrerer Polyvinylalkohole und gegebenenfalls Trocknung der damit erhaltenen Polymerdispersionen, wobei 10 bis 100 Gew.-% des Polyvinylalkohol-anteils vor der Initiierung der Polymerisation vorgelegt werden und der restliche Anteil während der Polymerisation zudosiert wird, und die Zugabe von Polyvinylalkohol und der Comonomere so gesteuert wird, daß während der Polymerisation die Menge an Schutzkolloid immer 1 bis 70 Gew.-% der Gesamtmenge an freien Comonomeren beträgt.

3. Verfahren nach Anspruch 2, dadurch gekennzeichnet, daß Gemische mit 20 bis 80 Gew.-% (Meth)acrylsäureester und 80 bis 20 Gew.-% 1,3-Dien, polymerisiert werden, wobei die Gemische gegebenenfalls noch ein oder mehrere der obengenannten Hilfsmonomere in den angegebenen Mengen enthalten können, und sich die Anteile in Gew.-% auf 100 Gew.-% auf-addieren.

4. Verfahren nach Anspruch 2 oder 3, dadurch gekennzeichnet, daß als 1,3-Dien 1,3-Butadien oder Isopren copolymerisiert werden.

5. Verfahren nach Anspruch 2 bis 4, dadurch gekennzeichnet, daß als Methacrylsäureester und Acrylsäureester ein oder mehrere aus der Gruppe Methylmethacrylat, Ethylmethacrylat, Propylmethacrylat, n-Butylmethacrylat, Methylacrylat, Ethylacrylat, Propylacrylat, n-Butylacrylat, t-Butylacrylat, t-Butylmethacrylat, 2-Ethylhexylacrylat copolymerisiert werden.

6. Verfahren nach Anspruch 2 bis 5, dadurch gekennzeichnet, daß 1,3-Butadien und Methylmethacrylat copolymerisiert werden.

7. Verfahren nach Anspruch 2 bis 6, dadurch gekennzeichnet, daß als Polyvinylalkohol ein oder mehrere aus der Gruppe der teilverseiften Polyvinylacetate und hydrophob modifizierten, teilverseiften Polyvinylester eingesetzt werden.

8. Verfahren nach Anspruch 2 bis 7, dadurch gekennzeichnet, daß als Polyvinylalkohol teilverseifte Polyvinylacetate mit einem Hydrolysegrad von 80 bis 95 Mol-%, und einer Höpplerviskosität von 1 bis 30 mPas eingesetzt werden.

9. Verfahren nach Anspruch 2 bis 8, dadurch gekennzeichnet, daß als Polyvinylalkohol hydrophob modifizierte, teilverseifte Polyvinylester, welche als 2 %-ige wässrige Lösung eine Oberflächenspannung von ≤ 40 mN/m erzeugen, eingesetzt werden.

10. Verfahren nach Anspruch 9, dadurch gekennzeichnet, daß teilverseifte Polyvinylacetate mit 84 bis 92 Mol-% Vinylalkohol-Einheiten und 0.1 bis 10 Gew.-% an Einheiten, welche sich von Vinylestern einer alpha-verzweigten Carbonsäure mit 5 oder 9 bis 11 C-Atomen im Säurerest, Isopropenylacetat und Ethen ableiten, eingesetzt werden.

11. Verfahren nach Anspruch 2 bis 10, dadurch gekennzeichnet, daß eine Kombination aus hydrophob modifiziertem Polyvinylester und teilverseiftem Polyvinylacetat als Polyvinylalkohol eingesetzt wird.

12. Verfahren nach Anspruch 2 bis 11, dadurch gekennzeichnet, daß die Polymerisation in Gegenwart von Reglern durchgeführt wird.

13. Verfahren nach Anspruch 12, dadurch gekennzeichnet, daß als Regler ein oder mehrere Substanzen aus der Gruppe n-Dodecylmercaptan, tert.-Dodecylmercaptan, Mercaptopropionsäure, Mercaptopropionsäuremethylester, Isopropanol und Acetaldehyd eingesetzt werden.

14. Verfahren nach Anspruch 2 bis 13, dadurch gekennzeichnet, daß die damit erhaltenen wässrigen Dispersionen mittels Wirbelschichttrocknung, Gefriertrocknung oder Sprühtrocknung getrocknet werden.

15. Verfahren nach Anspruch 2 bis 14, dadurch gekennzeichnet, daß der gesamte Schutzkolloidanteil sowie 5 bis 25 Gew.-% der Gesamtmenge an Comonomer vorgelegt wird und die restliche Comonomermenge während der Polymerisation zudosiert wird.

16. Verfahren nach Anspruch 2 bis 14, dadurch gekennzeichnet, daß die Gesamtmenge an Schutzkolloid und die Gesamtmenge an Comonomer vor der Initiierung der Polymerisation vorgelegt wird und in Gegenwart von Regler polymerisiert wird.

17. Verfahren nach Anspruch 2 bis 14, dadurch gekennzeichnet, daß unter Vorlage des gesamten Schutzkolloids oder unter Teilvorlage des Schutzkolloids der Comonomeranteil und der Regleranteil teilweise vorgelegt werden und der Rest jeweils zudosiert wird.

18. Wässrige Polymerdispersionen und in Wasser redispergierbare Polymerpulver erhältlich nach einem der Verfahren gemäß Anspruch 2 bis 17.

19. Verwendung der wässrigen Polymerdispersionen oder in Wasser redispergierbaren Polymerpulver gemäß Anspruch 1 und 18 in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben.

20. Verwendung der wässrigen Polymerdispersionen oder in Wasser redispergierbaren Polymerpulver gemäß Anspruch 1 und 18 als Alleinbindemittel für Beschichtungsmittel und Klebemittel.

21. Verwendung der wässrigen Polymerdispersionen oder in Wasser redispergierbaren Polymerpulver gemäß Anspruch 1 und 18 als Beschichtungs- bzw. Bindemittel für Textilien und Papier.

22. Verwendung gemäß Anspruch 19 als Gipsmörtel für Spachtelmassen, Joint-Filler, CaSO₄-Fließestriche, Fugenmassen, Klebemörtel, zur Herstellung von Gipsplatten oder Gipsformen, in Putzen oder Stukkaturen.

23. Verwendung gemäß Anspruch 19 zur Modifizierung von Fugenfüllern, gipsfreie Spachtelmassen und Putze auf Basis von CaCO₃-Werkstoffen.

24. Verwendung gemäß Anspruch 19 zur Anwendung in selbstverlaufenden Bodenspachtelmassen und Estrichen.

25. Verwendung gemäß Anspruch 19 in zementhaltigen Baukleberrezepturen zur Verlegung von Fliesen im Innen- und Außenbereich.

26. Verwendung gemäß Anspruch 20 als Klebemittel für die Verklebung von Holz zur Holz-Holz-Verklebung, die Verklebung von Holz mit saugfähigen Substraten wie Estrich und die Parkettverklebung.

27. Verwendung gemäß Anspruch 20 als Verpackungsklebstoff und Buchbindeklebstoff.

28. Verwendung gemäß Anspruch 20 als Bindemittel zur Verfestigung von Vliesstoffen von Natur- oder Kunstfasern, zur Herstellung von Formteilen aus Fasermaterialien, zur Herstellung von Vorstufen solcher Formteile, zur Wattenbindung und zur Herstellung von Laminaten.
